# EUROPÄISCHE PATENTANMELDUNG

(11) **EP 1 711 028 A1**
(43) Veröffentlichungstag der Anmeldung: **11.10.2006**
(21) Anmeldenummer: 05007686.8
(22) Anmeldetag: 07.04.2005
(51) Int. Cl.: H04Q 7/38

(54) **Verfahren zum Betrieb eines Funkkommunikationssystems sowie Funkkommunikationssystem und Funkstation**

(71) Anmelder: SIEMENS AKTIENGESELLSCHAFT, 80333 München (DE)
(72) Erfinder: Blechschmidt, Dierk, 82291 Mammendorf (DE); Rocchetti, Alfredo, 82061 Neuried (DE); Schäfer, Eberhard, 82024 Taufkirchen (DE); Wegmann, Bernhard, 83607 Holzkirchen (DE)

(57) **Zusammenfassung**

Bei einem Verfahren zum Betrieb eines Funkkommunikationssystems wird in wenigstens einer ersten Funkzelle (FZ1) eine erste Information (I1) an Teilnehmerstationen (MS1, MS2, MS3, MS4) gesendet, der entnehmbar ist, von welchen ersten weiteren Funkzellen (F1) die Teilnehmerstationen (MS1, MS2, MS3, MS4) jeweils Signale zum Erstellen von Messreporten (MR1, MR2, MR3, MR4) empfangen sollen. Erfindungsgemäß wird in der ersten Funkzelle (FZ1) alternativ oder zusätzlich zu der ersten Information (I1) eine zweite Information (I2) an eine Teilnehmerstation (MS1) gesendet, der entnehmbar ist, von welchen zweiten weiteren Funkzellen (F2) die Teilnehmerstation (MS1) Signale zum Erstellen entsprechender Messreporte empfangen soll, wobei sich die ersten und zweiten weiteren Funkzellen (F1, F2) um wenigstens eine Funkzelle unterscheiden.

## Beschreibung

Verfahren zum Betrieb eines Funkkommunikationssystems sowie Funkkommunikationssystem und Funkstation

Die Erfindung betrifft ein Verfahren zum Betrieb eines Funkkommunikationssystems sowie ein entsprechendes Funkkommunikationssystem und eine entsprechende Funkstation.

Funkzellen von Funkkommunikationssystemen werden bei der Netzplanung geografisch möglichst derart angeordnet, dass eine Teilnehmerstation, die sich in einer Funkzelle befindet, die Funkzelle in beliebiger Richtung verlassen kann und dabei in eine benachbarte Funkzelle gelangt, zu der ein Verbindungswechsel erfolgen kann. Auf diese Weise kann erreicht werden, dass es bei einem Funkzellenwechsel möglichst zu keinem Abbruch einer bestehenden Verbindung kommt.

Unter einer Funkzelle ist ein von einer Funkstation aufgespannter Funkabdeckungsbereich zu verstehen. Ein Funkabdeckungsbereich ist derjenige geografische Bereich, in dem von der Funkstation, unter Verwendung von im Funkkommunikationssystem vorgegebener Maximalwerte der Sendeleistung, gesendete Signale von Teilnehmerstationen empfangen und dekodiert werden können, und in dem entsprechende, von Teilnehmerstationen, die sich in dem geografischen Bereich befinden, gesendete Signale empfangen und dekodiert werden können. In einem Funkabdeckungsbereich kann eine Teilnehmerstation somit von der Funkstation funktechnisch versorgt werden. Eine Teilnehmerstation wird dann einer Funkzelle der Funkstation zugeordnet und nachfolgend von der Funkstation in der Funkzelle funktechnisch versorgt, wenn die Teilnehmerstation Signale aus der Funkzelle besser empfängt als Signale aus anderen Funkzellen. Die anderen Funkzellen können sowohl von der Funkstation, beispielsweise beim Verwenden einer Sektorantenne, als auch von anderen Funkstationen aufgespannt werden.

Damit es bei einem Funkzellenwechsel nicht zu einem Abbruch einer bestehenden Verbindung kommt, empfangen Teilnehmerstationen, die sich in einer ersten Funkzelle befinden, regelmäßig Signale aus benachbarten Funkzellen, d.h. von Funkstationen benachbarter Funkzellen. Beispielsweise wird ein Funkzellenwechsel, d.h. ein Wechsel einer bestehenden Verbindung von der ersten zu einer zweiten Funkzelle, dann durchgeführt, wenn eine Teilnehmerstation, Signale aus der zweiten Funkzelle besser empfängt als Signale aus der ersten Funkzelle. Um insbesondere mit Blick auf einen Funkzellenwechsel Signale benachbarter Funkstationen empfangen zu können, wird an die Teilnehmerstationen, die sich beispielsweise in der ersten Funkzelle befinden, eine Information gesendet, der entnehmbar ist, von welchen benachbarten Funkstationen die Teilnehmerstationen Signale empfangen sollen. Hierzu genügt es beispielsweise diejenigen Frequenzen anzugeben, die in den benachbarten Funkzellen jeweils zur Übertragung von Signalen verwendet werden. Die Teilnehmerstationen erstellen anhand der aus den benachbarten Funkzellen empfangenen Signale jeweils in regelmäßigen Abständen Messreporte, in denen beispielsweise eine Kennung der Funkzellen in Verbindung mit einer Übertragungsqualität der aus den Funkzellen empfangenen Signale angegeben wird. Als Übertragungsqualität kann beispielsweise eine Empfangsleistung der empfangenen Signale angegeben werden. Eine derartige Information über benachbarte Funkzellen und derartige Messreporte sind beispielsweise aus dem GSM (Global System for Mobile Communications) Standard 04.08 V7.21.0 (2003-12), Kapitel 3.4.1.2, 9.1.32, 9.1.33, 9.1.34, 9.1.37, 9.1.38, 9.1.39, 10.5.2.20 und 10.5.2.22 bekannt.

Trotz sorgfältiger Netzplanung kann es dazu kommen, dass eine Teilnehmerstation Signale aus der ersten Funkzelle an einem Ort am stärksten empfängt, an dem die Teilnehmerstation laut Netzplanung eigentlich Signale aus der zweiten Funkzelle am stärksten empfangen sollte. Die Teilnehmerstation wird in diesem Fall in der ersten Funkzelle funktechnisch versorgt, d.h. sie sendet insbesondere von ihr zu übertragende Daten an eine die erste Funkzelle aufspannende Funkstation, obwohl sie sich an einem Ort befindet, an dem sie laut Netzplanung eigentlich ihre Daten an eine die zweite Funkzelle aufspannende Funkstation senden sollte. Derartige Orte, die beispielsweise in zusammenhängenden Gebieten liegen können, werden als Verkehrsinseln (traffic islands) bezeichnet. Verkehrsinseln, d.h. eine Zuordnung einer Teilnehmerstation zu einer Funkzelle in einem dafür nicht vorgesehenen Gebiet, entstehen beispielsweise auf Grund spezieller topologischer und geografischer Situationen wie zum Beispiel hügeliges Gelände oder in großer Höhe angebrachte Antennen von Funkstationen. Derartige Situationen können bei einer Netzplanungsprozedur nicht ohne weiteres und nicht zu einhundert Prozent in Betracht gezogen werden.

Befindet sich die Teilnehmerstation in einer Verkehrsinsel der ersten Funkzelle, so versucht die Teilnehmerstation, aufgrund einer entsprechenden in der ersten Funkzelle gesendeten Information, Signale auf Frequenzen von Funkzellen zu empfangen, die laut Netzplanung zu der ersten Funkzelle benachbart sind. Es kann daher dazu kommen, dass die Teilnehmerstation in der Verkehrsinsel keine Signale aus anderen Funkzellen empfängt, falls ihr tatsächlich benachbarte Funkzellen andere Frequenzen verwenden, als durch die in der ersten Funkzelle gesendete Information mitgeteilt wurde. Empfängt die Teilnehmerstation auf den ihr mitgeteilten Frequenzen Signale aus anderen Funkzellen, sind die Kennungen der anderen Funkzellen andere Kennungen, als die Kennungen der Funkzellen der tatsächlich zu der ersten Funkzelle benachbarten Funkzellen.

Teilnehmerstationen, die sich in einer Verkehrsinsel einer Funkzelle befinden, benötigen meist sehr hohe Sendeleistungen und erzeugen dadurch große Interferenzen bei den ihnen tatsächlich benachbarten Funkzellen. Weiterhin ist für Teilnehmerstationen, die sich in einer Verkehrsinsel befinden, auch ein Verbindungswechsel zwischen Funkzellen oftmals nicht möglich, da diese Teilnehmerstationen keine Signale oder Signale aus Funkzellen mit der "falschen" Kennung empfangen.

Bisher wird versucht, das Entstehen von Verkehrsinseln durch eine möglichst sorgfältige Netzplanung zu verhindern, die beispielsweise auch geografische Gegebenheiten in Betracht zieht. Da jedoch auch eine noch so sorgfältige Netzplanung das Entstehen von Verkehrsinseln nicht vollständig verhindern kann, ist es Aufgabe der Erfindung, ein Verfahren zum Betrieb eines Funkkommunikationssystem sowie ein Funkkommunikationssystem und eine Funkstation anzugeben, mittels derer für Teilnehmerstationen, die sich in einer Verkehrsinsel befinden, eine Wahrscheinlichkeit für einen Verbindungsabbruch beim Verlassen der Verkehrsinsel reduziert werden kann.

Diese Aufgabe wird mit dem Verfahren sowie dem Funkkommunikationssystem der Funkstation gemäß den unabhängigen Ansprüchen gelöst.

Vorteilhafte Ausgestaltungen und Weiterbildungen der Erfindung sind Gegenstand der abhängigen Ansprüche.

Bei einem erfindungsgemäßen Verfahren zum Betrieb eines Funkkommunikationssystems wird in wenigstens einer ersten Funkzelle eine erste Information an Teilnehmerstationen gesendet, der entnehmbar ist, von welchen ersten weiteren Funkzellen die Teilnehmerstationen jeweils Signale zum Erstellen von Messreporten empfangen sollen. Erfindungsgemäß wird in der ersten Funkzelle alternativ oder zusätzlich zu der ersten Information eine zweite Information an eine Teilnehmerstation gesendet, der entnehmbar ist, von welchen zweiten weiteren Funkzellen die Teilnehmerstation Signale zum Erstellen entsprechender Messreporte empfangen soll, wobei sich die ersten und zweiten weiteren Funkzellen um wenigstens eine Funkzelle unterscheiden.

Dadurch, dass der Teilnehmerstation durch die zweite Information zweite weitere Funkzellen signalisiert werden, die sich von den ersten weiteren Funkzellen um wenigstens eine Funkzelle unterscheiden, ist es möglich, der Teilnehmerstation die zweite Information genau dann zu senden, wenn sich die zweite Teilnehmerstation in einer Verkehrsinsel der ersten Funkzelle befindet. Bei den zweiten weiteren Funkzellen handelt es sich in diesem Fall beispielsweise um diejenigen Funkzellen, die sich in der Nachbarschaft der Verkehrsinsel befinden.

Befindet sich die Teilnehmerstation in einer Verkehrsinsel der ersten Funkzelle, sind ihr andere Funkzellen benachbart, als wenn sich die Teilnehmerstation regulär, d.h. außerhalb der Verkehrsinsel, in der ersten Funkzelle befindet. Die der ersten Funkzelle bei regulärem Aufenthalt in der ersten Funkzelle benachbarten Funkzellen sind beispielsweise die ersten weiteren Funkzellen, die Teilnehmerstationen mit der ersten Information mitgeteilt werden. In bisher bekannten Funkkommunikationssystemen kann es daher vorkommen, dass die Teilnehmerstation keine Signale von den ersten weiteren Funkzellen empfangen kann, weil sich die Teilnehmerstation in der Verkehrsinsel beispielsweise in einer zu großen Distanz zu den ersten weiteren Funkzellen befindet. Beim Verlassen der ersten Funkzelle kommt es in diesem Fall zu einem Abbruch bestehender Verbindungen. Erfindungsgemäß werden der Teilnehmerstation jedoch andere, nämlich die zweiten weiteren Funkzellen in der zweiten Information mitgeteilt, damit die Teilnehmerstation von den zweiten weiteren Funkzellen Signale empfängt. Auf diese Weise kann erreicht werden, dass auch dann Messergebnisse in den Messreporten der Teilnehmerstation vorhanden sind und somit ein Funkzellenwechsel ohne Verbindungsabbruch erfolgen kann, wenn sich die Teilnehmerstation in einer Verkehrsinsel der ersten Funkzelle befindet.

Vorteilhafterweise erfolgt das Senden der zweiten Information in Abhängigkeit von wenigstens einem Maß der Entfernung zwischen der Teilnehmerstation und einer die erste Funkzelle aufspannenden ersten Funkstation.

Als Maß der Entfernung zwischen der Teilnehmerstation und der die erste Funkzelle aufspannenden ersten Funkstation kann beispielsweise eine von der Teilnehmerstation gemessene Empfangsfeldstärke für Signale der die erste Funkzelle aufspannenden Funkstation und/oder ein Wert eines Zeitvorschubs (Timing Advance) und/oder eine beispielsweise mittels einer GPS-Empfängers ermittelte Position der Teilnehmerstation verwendet werden. Das Maß der Entfernung wird entweder von der die erste Funkzelle aufspannenden ersten Funkstation bestimmt oder von der Teilnehmerstation selbst bestimmt und beispielsweise in einem Messreport übertragen. Anhand des Maßes der Entfernung kann die Entfernung zwischen der Teilnehmerstation und der ersten Funkstation abgeschätzt oder sogar exakt bestimmt werden. Je größer die Entfernung zwischen der Teilnehmerstation und der ersten Funkstation ist, umso größer ist die Wahrscheinlichkeit, dass sich die Teilnehmerstation in einer Verkehrsinsel der ersten Funkzelle befindet.

Es ist daher von Vorteil, wenn die zweite Information an die Teilnehmerstation gesendet wird, falls die Entfernung zwischen der Teilnehmerstation und der ersten Funkstation einen Grenzwert überschreitet.

Der Grenzwert kann netzseitig anhand von Netzplanungsdaten oder anhand von in dem Netz durchgeführten Messungen fest vorgegeben werden, so dass ein Überschreiten des Grenzwertes mit hoher Wahrscheinlichkeit dafür gewertet werden kann, dass sich die Teilnehmerstation in einer Verkehrsinsel der ersten Funkzelle befindet, und dass es deshalb erforderlich ist, ihr die zweite Information und somit eine Information über die zweiten weiteren Funkzellen mitzuteilen.

Vorteilhafter Weise werden Messergebnisse eines Signale der ersten weiteren Funkzellen betreffenden ersten Messreports der Teilnehmerstation als Maß der Entfernung zwischen der Teilnehmerstation und der ersten Funkstation verwendet.

Selbst wenn keine Messgrößen bekannt sind, aus denen explizit ein Schätzwert der Entfernung zwischen der Teilnehmerstation und der ersten Funkstation ermittelt werden kann, kann der Inhalt des ersten Messreports, der die ersten weiteren Funkzellen betrifft, als Maß der Entfernung verwendet werden. Selbstverständlich kann der Inhalt des ersten Messreports auch zusätzlich zu Messgrößen verwendet werden.

Mit Vorteil wird die zweite Information an die Teilnehmerstation gesendet, falls der erste Messreport keine Messergebnisse oder ausschließlich Messergebnisse für Signale aus der ersten Funkzelle enthält.

Es kann nämlich in diesem Fall mit hoher Wahrscheinlichkeit angenommen werden, dass sich die Teilnehmerstation in einer Verkehrsinsel der ersten Funkzelle befindet und somit die zweite Information alternativ oder zusätzlich zur ersten Information benötigt. Gleiches kann angenommen werden, wenn der erste Messreport Messergebnisse für wenigstens eine Funkzelle enthält, die gemäß einer Netzplanung des Funkkommunikations-systems keine Nachbarfunkzelle der ersten Funkzelle ist.

Es ist daher auch von Vorteil, wenn die zweite Information an die Teilnehmerstation gesendet wird, falls der erste Messreport Messergebnisse für wenigstens eine Funkzelle enthält, die gemäß einer Netzplanung des Funkkommunikationssystems keine Nachbarfunkzelle der ersten Funkzelle ist.

Es ist zweckmäßig, dass die der zweiten Information entnehmbaren zweiten weiteren Funkzellen für die erste Funkzelle fest vorgegeben sind oder anhand von in der ersten Funkzelle empfangenen Messreporten dynamisch festgelegt werden.

Vorteilhafter Weise werden das Senden der zweiten Information an die Teilnehmerstation und/oder die der zweiten Information entnehmbaren zweiten weiteren Funkzellen und/oder wenigstens ein, Signale der zweiten weiteren Funkzellen betreffender Messreport zusammen mit einer Kennung der ersten Funkzelle einem Managementsystem des Funkkommunikationssystems mitgeteilt.

Dadurch, dass das Managementsystem des Funkkommunikationssystems, beispielsweise ein so genanntes Operation and Maintenance Center, darüber informiert wird, dass die zweite Information an die Teilnehmerstation gesendet wurde und sich somit mit hoher Wahrscheinlichkeit in einer Verkehrsinsel der ersten Funkzelle befindet, wird einem Betreiber des Funkkommunikationssystems ermöglicht, bei einer erneuten Netzplanung die ihm durch derartige Mitteilungen bekannt gewordenen Verkehrsinseln zu identifizieren und gegebenenfalls zu beseitigen. Zumindest besteht so eine Möglichkeit, um für Funkzellen, die Verkehrsinseln aufweisen, jeweils zweite weitere Funkzellen fest vorzugeben.

Das erfindungsgemäße Funkkommunikationssystem sowie die erfindungsgemäße Funkstation weisen alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

Die Erfindung wird im Folgenden anhand von in den Figuren dargestellten Ausführungsbeispielen näher erläutert. Es zeigen:
- Fig. 1: eine schematische Darstellung eines Funkkommunikationssystems, in dem das erfindungsgemäße Verfahren durchgeführt wird,
- Fig. 2: eine schematische Darstellung eines ersten Ablaufdiagramms zur Entscheidung, ob eine zweite Information an eine Teilnehmerstation gesendet wird oder nicht,
- Fig. 3: eine schematische Darstellung eines zweiten Ablaufdiagramms zur Entscheidung, ob eine zweite Information an eine Teilnehmerstation gesendet wird oder nicht,
- Fig. 4: eine schematische Darstellung eines dritten Ablaufdiagramms zur Entscheidung, ob eine zweite Information an eine Teilnehmerstation gesendet wird oder nicht.

Gleiche Bezugszeichen in den Figuren bezeichnen gleiche Gegenstände.

Eine Teilnehmerstation ist beispielsweise ein Mobilfunkendgerät, insbesondere eine Mobilstation (mobile station) oder auch eine ortsbewegliche oder ortsfeste Vorrichtung zur Übertragung von Bild- und/oder Tondaten, zum Fax-, Short Message Service SMS-, Multimedia Messaging Service MMS- und/oder E-mail-Versand und/oder zum Internet-Zugang.

Eine Basisstation ist eine netzseitige Funkstation, die von einer Teilnehmerstation Nutz- und/oder Signalisierungsdaten empfängt und/oder Nutz- und/oder Signalisierungsdaten an die Teilnehmerstation sendet. Eine Basisstation ist über netzseitige Einrichtungen mit einem Kernnetz verbunden, über das Verbindungen in andere Funkkommunikationssysteme oder in andere Datennetze erfolgen. Unter einem Datennetz ist beispielsweise das Internet oder ein Festnetz mit beispielsweise leitungsvermittelten oder paketvermittelten Verbindungen für z.B. Sprache und/oder Daten zu verstehen.

Nachfolgend wird als Funkstation eine Basisstation betrachtet, ohne jedoch damit zum Ausdruck bringen zu wollen, dass die Erfindung hierauf beschränkt sein soll.

Nachfolgend wird als Teilnehmerstation eine Mobilstation betrachtet, ohne jedoch damit zum Ausdruck bringen zu wollen, dass die Erfindung hierauf beschränkt sein soll.

Die Erfindung kann vorteilhaft in beliebigen Funkkommunikationssystemen verwendet werden. Unter Funkkommunikationssystemen sind Systeme zu verstehen, in denen eine Datenübertragung zwischen Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM- oder dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of Electrical and Electronics Engineers) 802.11a-i, HiperLAN1 und HiperLAN2 (HiperLAN: high performance radio local area network) sowie Bluetooth-Netze und Breitbandnetze mit drahtlosem Zugang beispielsweise gemäß IEEE 802.16. Funkkommunikationssysteme können beispielsweise mit WiMAX Technologie (WiMAX: Worldwide Interoperability for Microwave Access) und/oder mit Flash-OFDM® (OFDM: Orthogonal Frequency Division Multiplex) betrieben werden.

Im Folgenden wird die Erfindung am Beispiel eines Mobilfunksystems nach dem GSM-Standard beschrieben, ohne jedoch damit zum Ausdruck bringen zu wollen, dass die Erfindung hierauf beschränkt sein soll.

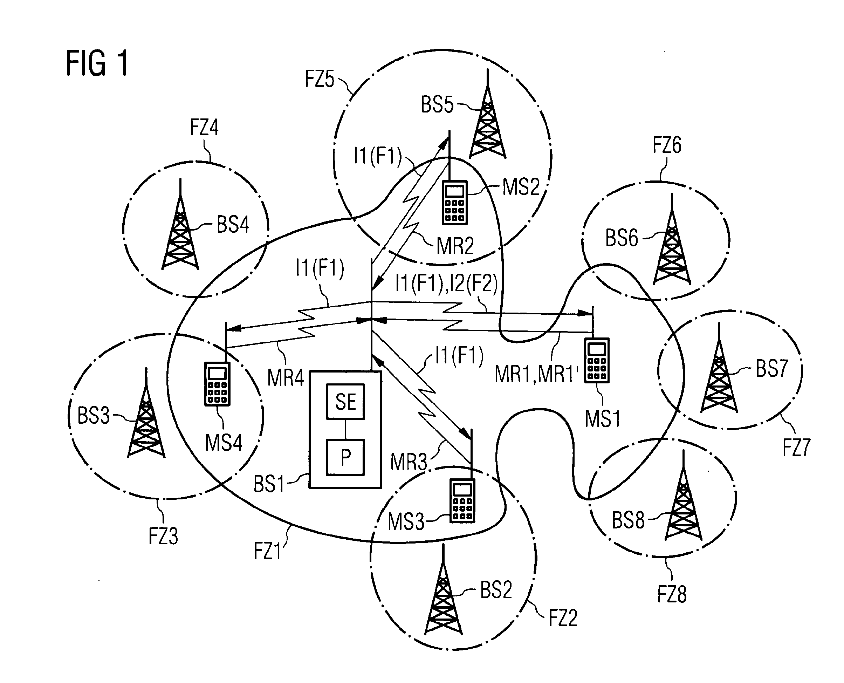

Figur 1 zeigt schematisch eine erste Basisstation BS1, die eine erste Funkzelle FZ1 aufspannt und die Mobilstationen, die sich in der ersten Funkzelle FZ1 befinden, funktechnisch versorgt. Zum Senden und Empfangen von Signalen verfügt die erste Basisstation BS1 über eine Sende- und Empfangseinheit SE, sowie über einen Prozessor P zum Steuern der ersten Basisstation BS1, insbesondere zum Steuern der Sende- und Empfangseinheit SE. Eine zweite Funkzelle FZ2, die von einer zweiten Basisstation BS2 aufgespannt wird, eine dritte Funkzelle FZ3, die von einer dritten Basisstation BS3 aufgespannt wird, eine vierte Funkzelle FZ4, die von einer vierten Basisstation BS4 aufgespannt wird, sowie eine fünfte Funkzelle FZ5, die von einer fünften Basisstation BS5 aufgespannt wird, grenzen direkt an die erste Funkzelle FZ1. Die zweite, dritte, vierte und fünfte Funkzelle FZ2, FZ3, FZ4, FZ5 sind diejenigen Funkzellen, die geografisch unmittelbar an die erste Funkzelle FZ1 angrenzen und die netzseitig als zu der ersten Funkzelle FZ1 benachbarte Funkzellen behandelt werden. Bewegt sich eine Teilnehmerstation, die sich in der ersten Funkzelle FZ1 befindet, aus der ersten Funkzelle FZ1 heraus, so wird netzseitig davon ausgegangen, dass ein Verbindungswechsel zu einer der benachbarten Funkzellen FZ2, FZ3, FZ4, FZ5 erfolgt.

Figur 1 zeigt weiterhin schematisch eine erste Mobilstation MS1, die sich in einem Gebiet aufhält, in dem gemäß Netzplanung des Funkkommunikationssystems eigentlich keine Verbindung mit der ersten Basisstation BS1 vorgesehen ist. Dennoch befindet sich die erste Mobilstation MS1 in diesem Gebiet in der ersten Funkzelle FZ1, d.h. sie empfängt Signale von der ersten Basisstation BS1 besser, beispielsweise mit einer größeren Empfangsleistung, als beispielsweise Signale aus der zweiten, dritten, vierten oder fünften Funkzelle FZ2, FZ3, FZ4, FZ5. Der Bereich, in dem sich die erste Mobilstation MS1 befindet, und in dem eigentlich gemäß Netzplanung keine Verbindungen mit der ersten Basisstation BS1 vorgesehen ist, wird als Verkehrsinsel der ersten Funkzelle FZ1 bezeichnet und ist beispielhaft durch eine Ausstülpung der ansonsten kreisförmig dargestellten ersten Funkzelle FZ1 dargestellt.

Selbstverständlich kann eine Verkehrsinsel auch von einer Basisstation aufgespannt werden, ohne dass eine geografische Verbindung zwischen der eigentlichen, gemäß Netzplanung von der Basisstation aufgespannten Funkzelle und der Verkehrsinsel besteht. Beispielsweise kann es sich bei der eigentliche Funkzelle und der Verkehrsinsel jeweils um ein geschlossenes Gebiet (beispielsweise einen Kreis) handeln, wobei die beiden geschlossenen Gebiete nicht überlappen, d.h. keine gemeinsamen Punkte aufweisen.

In dem regulären Bereich der ersten Funkzelle FZ1, d.h. der eigentlichen Funkzelle, die gemäß Netzplanung geografisch der ersten Funkzelle FZ1 entspricht, befinden sich eine zweite Mobilstation MS2, eine dritte Mobilstation MS3 und eine vierte Mobilstation MS4. Die erste Basisstation BS1 ist derart ausgebildet, dass sie an Mobilstationen, die sich in der ersten Funkzelle FZ1 befinden, eine erste Information I1 sendet, der die Mobilstationen erste weitere Funkzellen F1 entnehmen können, aus denen die Mobilstationen Signale zum Erstellen von Messreporten empfangen sollen. Diese Messreporte dienen beispielsweise einer Entscheidung darüber, ob ein Verbindungswechsel einer Mobilstation von der ersten Funkzelle FZ1 zu einer anderen Funkzelle erfolgen soll.

Selbstverständlich können anstelle der gemäß dem GSM-Standard zum Erstellen von Messreporten empfangenen Signale in anderen Funkkommunikationssystemen beispielsweise Beacon-Signale oder andere Signalmuster verwendet werden.

Die erste, zweite, dritte und vierte Mobilstation MS1, MS2, MS3, MS4 empfangen jeweils die erste Information I1 von der ersten Basisstation BS1. Die ersten weiteren Funkzellen F1, die der ersten Information I1 entnehmbar sind, sind die zweite, dritte, vierte und fünfte Funkzelle FZ2, FZ3, FZ4, FZ5. Die erste Information I1 kann beispielsweise eine Kennung jeder der ersten weiteren Funkzellen F1 angeben, so dass die Mobilstationen MS1, MS2, MS3, MS4 anhand der Kennung erkennen können, um welche Funkzellen FZ2, FZ3, FZ4, FZ5 es sich explizit handelt. Alternativ oder zusätzlich kann die erste Information I1 diejenigen Frequenzen angeben, auf denen in den ersten weiteren Funkzellen F1 jeweils Signale übertragen werden.

Zum Senden der ersten Information I1 können beispielsweise System Information Type 2, 2bis, 2ter oder 5, 5bis, 5ter gemäß dem GSM-Standard 04.08 V7.21.0 (2003-12), Kapitel 9.1.32, 9.1.33, 9.1.34, 9.1.37, 9.1.38, 9.1.39 und 10.5.2.22 verwendet werden, während Messreporte beispielsweise gemäß GSM-Standard 04.08 V7.21.0 (2003-12), Kapitel 3.4.1.2 und 10.5.2.20 gebildet werden.

Die Mobilstationen MS1, MS2, MS3, MS4 versuchen nachfolgend Signale aus den in der ersten Information I1 angegebenen ersten weiteren Funkzellen F1 zu empfangen. Bei Empfang werden beispielsweise die Empfangsleistung der empfangenen Signale sowie eine Kennung ermittelt, die die Funkzelle, aus der die jeweiligen Signale empfangen werden identifiziert. Die anhand der empfangenen Signale ermittelten Messergebnisse werden jeweils in einem Messreport MR1, MR2, MR3, MR4 an die erste Basisstation BS1 gesendet. Zusätzlich ist in den Messreporten MR1, MR2, MR3, MR4 beispielsweise ein Wert eines Zeitvorschubs (timing advance) angegeben, der die Laufzeit von Signalen zwischen der ersten Basisstation BS1 und der entsprechenden Mobilstation MS1, MS2, MS3, MS4 berücksichtigt und somit proportional zur Entfernung zwischen der ersten Basisstation BS1 und der entsprechenden Mobilstation MS1, MS2, MS3, MS4 ist. Außer der Empfangsfeldstärke der empfangenen Signale aus den ersten weiteren Funkzellen F1, ist in den Messreporten MR1, MR2, MR3, MR4 jeweils auch die Empfangsleistung für Signale angegeben, die von der ersten Basisstation BS1 empfangen werden.

Anhand der Empfangsfeldstärke für Signale der ersten Basisstation BS1 und/oder anhand des Zeitvorschubs kann die erste Basisstation BS1 die Entfernung zu der entsprechenden Mobilstation MS1, MS2, MS3, MS4 abschätzen. Ist die Entfernung kleiner als ein vorbestimmter Grenzwert, wird angenommen, dass sich die entsprechende Mobilstation innerhalb des regulären Bereichs der ersten Funkzelle FZ1 befindet. Anderenfalls wird angenommen, dass sich die entsprechende Mobilstation in dem ausgestülpten Bereich der ersten Funkzelle FZ1, d.h. in der Verkehrsinsel der ersten Funkzelle FZ1 befindet.

In diesem Ausführungsbeispiel ist die geschätzte Entfernung der ersten Mobilstation MS1 zur ersten Basisstation BS1 größer als der vorbestimmte Grenzwert. Darüber hinaus sind dem ersten Messreport MR1 der ersten Mobilstation MS1 lediglich Messergebnisse hinsichtlich von der ersten Basisstation BS1 empfangener Signale zu entnehmen. Andere Messergebnisse liegen in dem ersten Messreport MR1 nicht vor, so dass die erste Mobilstation MS1 offensichtlich keine Signale von den ersten weiteren Funkzellen F1 empfangen hat. Die erste Basisstation BS1 sendet daher eine zweite Information I2 an die erste Mobilstation MS1. Der zweiten Information I2 sind zweite weitere Funkzellen F2 entnehmbar, die der ersten Mobilstation MS1 tatsächlich benachbart sind. Der zweiten Information I2 sind eine sechste Funkzelle FZ6, die von einer sechsten Basisstation BS6 aufgespannt wird, eine siebte Funkzelle FZ7, die von einer siebten Basisstation BS7 aufgespannt wird, und eine achte Funkzelle FZ8, die von einer achten Basisstation BS8 aufgespannt wird, entnehmbar. Die erste Mobilstation MS1 empfängt nachfolgend Signale aus den zweiten weiteren Funkzellen F2 und übermittelt entsprechende Messergebnisse in weiteren Messreporten MR1'. Anhand der weiteren Messreporte MR1' kann beispielsweise über einen Funkzellenwechsel zu einer der zweiten weiteren Funkzellen F2 entschieden werden.

Welche zweiten weiteren Funkzellen F2 die erste Basisstation BS1 in der zweiten Information I2 angibt, wird beispielsweise bereits bei einer Netzplanung festgelegt, wobei hier Abschätzungen, beispielsweise hinsichtlich geografischer Gegebenheiten und/oder der verwendeten Antennenhöhe, zugrunde gelegt werden, die eine Aussage darüber ermöglichen, ob die erste Funkzelle FZ1 Verkehrsinseln aufweisen wird und welche Funkzellen gegebenenfalls zu den möglicherweise auftretenden Verkehrsinseln benachbart sein könnten. Weiterhin ist es möglich, diejenigen Funkzellen FZ6, FZ7, FZ8 alternativ oder zusätzlich zu den der ersten Funkzelle FZ1 gemäß Netzplanung benachbarten Funkzellen FZ2, FZ3, FZ4, FZ5 in der zweiten Information I2 anzugeben, die beispielsweise gemäß Netzplanung benachbart zu den benachbarten Funkzellen FZ2, FZ3, FZ4, FZ5 liegen.

Weiterhin kann die Netzplanung derart erfolgt sein, dass in einer der Funkzellen FZ6, FZ7, FZ8, die tatsächlich zu der Verkehrsinsel benachbart sind, die gleiche Frequenz verwendet wird, wie in einer der ersten Funkzelle FZ1 gemäß Netzplanung benachbarten Funkzelle FZ2, FZ3, FZ4, FZ5. In diesem Fall, werden selbstverständlich Messergebnisse hinsichtlich aus der entsprechenden Funkzelle empfangener Signale sowie eine Kennung der entsprechenden Funkzelle in dem ersten Messreport MR1 angegeben. In diesem Fall kann die erste Basisstation BS1 die ersten weiteren Funkzellen F1 zumindest um die in dem ersten Messreport MR1 angegebene zusätzliche Funkzelle erweitern und die derart erweiterten Funkzellen als zweite Information I2 und somit als zweite weitere Funkzellen F2 an die erste Mobilstation MS1 senden.

Zum Senden der zweiten Information I2 können System Information Type 2, 2bis, 2ter gemäß dem GSM-Standard 04.08 V7.21.0 (2003-12), Kapitel 9.1.32, 9.1.33 und 9.1.34 nicht verwendet werden, da diese Nachrichten (messages) auf einem Rundsendekanal (BCCH: Broadcast Control CHannel) übertragen werden und die zweite Information I2 auf einem dedizierten Kanal an die entsprechende Mobilstation übertragen werden muss. Allerdings können zum Senden der zweiten Information I2 beispielsweise System Information Type 5, 5bis, 5ter gemäß dem GSM-Standard 04.08 V7.21.0 (2003-12), Kapitel 9.1.37, 9.1.38 und 9.1.39 verwendet werden, da diese Nachrichten auf einem dedizierten Kanal (SACCH: Slow Associated Control CHannel) übertragen werden.

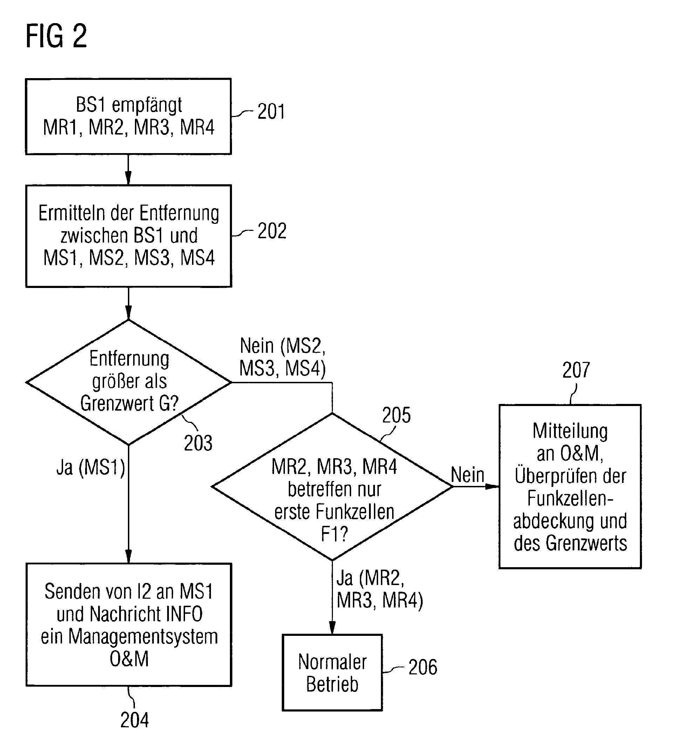

Figur 2 zeigt schematisch ein erstes Ablaufdiagramm zur Entscheidung darüber, ob an eine Mobilstation die zweite Information I2 gesendet wird oder nicht. Betrachtet werden die Mobilstationen MS1, MS2, MS3, MS4 gemäß Figur 1, die jeweils bevor der Ablauf in Kasten 201 beginnt die erste Information I1 empfangen haben und daher an die erste Basisstation BS1 Messreporte MR1, MR2, MR3, MR4 übertragen, die jeweils Messergebnisse für Signale aus den ersten weiteren Funkzellen F1 enthalten sollen.

In Kasten 201 empfängt die erste Basisstation BS1 die Messreporte MR1, MR2, MR3, MR4 von der ersten, zweiten, dritten und vierten Mobilstation MS1, MS2, MS3, MS4. In Kasten 202 ermittelt die erste Basisstation BS1 anhand eines jeweiligen Maßes der Entfernung jeweils einen Wert der Entfernung zur ersten, zweiten, dritten und vierten Mobilstation MS1, MS2, MS3, MS4. In Kasten 203 wird der jeweilige Wert der Entfernung mit einem Grenzwert G verglichen. Ist der Wert der Entfernung größer als der Grenzwert G, dies ist der Fall für die erste Mobilstation MS1, erfolgt in Kasten 202 das Senden der zweiten Information I2 an die erste Mobilstation MS1 und gleichzeitig wird eine Nachricht INFO an ein Managementsystem O&M gesendet.

Mit der Nachricht INFO informiert die erste Basisstation BS1 das Managementsystem O&M darüber, dass sich die erste Mobilstation MS1 in einer Verkehrsinsel der ersten Funkzelle FZ1 befindet. Hierzu wird mit der Nachricht INFO eine Kennung der ersten Funkzelle FZ1 sowie, falls vorhanden, die exakte oder geschätzte Position der ersten Mobilstation MS1 und/oder die der zweiten Information I2 entnehmbaren zweiten weiteren Funkzellen F2 und/oder wenigstens ein Messreport, der Signale der zweiten weiteren Funkzellen FZ2 betrifft, übermittelt. Das Managementsystem O&M kann die Nachricht INFO nachfolgend für eine weitere Netzplanung oder beispielsweise für eine feste Vorgabe von zweiten weiteren Funkzellen F2 für die erste Funkzelle FZ1 verwenden.

Ist die Entfernung zwischen der ersten Basisstation BS1 und der entsprechenden Mobilstation kleiner als der Grenzwert G, dies ist der Fall für die zweite, dritte und vierte Mobilstation MS2, MS3, MS4, dann wird in Kasten 205 der Inhalt der jeweils von diesen Mobilstationen MS2, MS3, MS4 empfangenen Messreporte MR2, MR3, MR4 überprüft. Sind in einem Messreport MR2, MR3, MR4 nur Messergebnisse enthalten, die anhand von Signalen aus den ersten weiteren Funkzellen F1 ermittelt wurden, befindet sich die entsprechende Mobilstation offensichtlich innerhalb des regulären Bereichs der ersten Funkzelle FZ1. Es kommt daher in Kasten 206 zu einem normalen Betrieb, d.h. zu einem Betrieb gemäß den entsprechenden, dem Fachmann geläufigen Betriebsbedingungen des Funkkommunikationssystems. Werden in Kasten 205 Messreporte entdeckt, die beispielsweise keine Messergebnisse, beziehungsweise ausschließlich anhand von Signalen aus der ersten Funkzelle FZ1 ermittelte Messergebnisse enthalten, oder die Messergebnisse von Funkzellen enthalten, die nicht zu den ersten weiteren Funkzellen F1 gehören, wird in Kasten 207 eine Mitteilung dieses Zustandes an das Managementsystem O&M unter Angabe beispielsweise einer Kennung der entsprechenden Mobilstationen und/oder der ersten Funkzelle FZ1 und/oder der in den entsprechenden Messreporten enthaltenen Messergebnisse durchgeführt. Das Managementsystem O&M kann daraufhin überprüfen, ob die Funkzellenabdeckung der ursprünglichen Netzplanung entspricht und/oder ob der Wert des Grenzwertes G so gewählt wurde, dass tatsächlich alle Mobilstationen, die sich in einer Verkehrsinsel der ersten Funkzelle FZ1 befinden, durch die Grenzwertabfrage erfasst werden können.

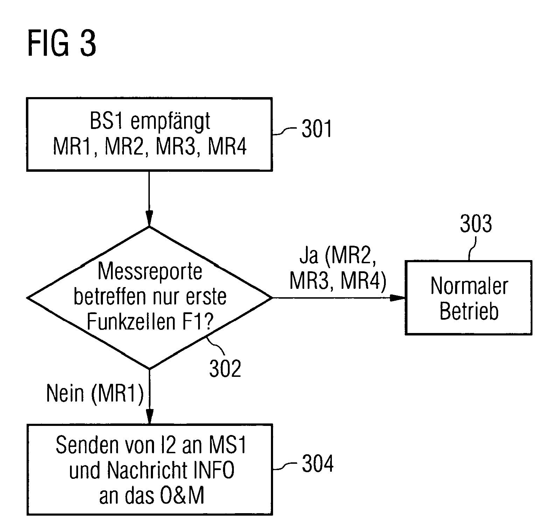

Figur 3 zeigt schematisch ein zweites Ablaufdiagramm zur Entscheidung darüber, ob an eine Mobilstation die zweite Information I2 gesendet wird oder nicht. Betrachtet werden - wie schon für das erste Ablaufdiagramm gemäß Figur 2 - die Mobilstationen MS1, MS2, MS3, MS4 gemäß Figur 1, die jeweils bevor der Ablauf in Kasten 301 beginnt die erste Information I1 empfangen haben und daher an die erste Basisstation BS1 Messreporte übertragen, die jeweils Messergebnisse für Signale aus den ersten weiteren Funkzellen F1 enthalten sollen.

In Kasten 301 empfängt die erste Basisstation BS1 von der ersten, zweiten, dritten und vierten Mobilstation MS1, MS2, MS3, MS4 jeweils einen Messreport MR1, MR2, MR3, MR4. In Kasten 302 wird, wie bereits zu Figur 2 anhand von Kasten 205 beschrieben, überprüft, ob die Messreporte jeweils nur Messergebnisse für Signale aus den ersten weiteren Funkzellen F1 enthalten. Sind in einem Messreport nur Messergebnisse für Signale aus ersten weiteren Funkzellen F1 und - sofern gemessen - Messergebnisse für Signale aus der ersten Funkzelle FZ1 enthalten, wird angenommen, dass sich die entsprechende Mobilstation in dem regulären Bereich der ersten Funkzelle FZ1 befindet. Dies ist der Fall für die zweite, dritte und vierte Mobilstation MS2, MS3, MS4 und somit für die zweiten, dritten und vierten Messreporte MR2, MR3, MR4. Für die zweite, dritte und vierte Mobilstation MS2, MS3, MS4 erfolgt daher in Kasten 303 ein normaler, dem Fachmann bekannter Betrieb in dem Funkkommunikationssystem.

In dem Messreport MR1 der ersten Mobilstation MS1 sind nur Messergebnisse für Signale aus der ersten Funkzelle FZ1 und für Signale aus der sechsten Funkzelle FZ6 enthalten. Die sechste Basisstation BS6 sendet nämlich in der sechsten Funkzelle FZ6 für Messreporte zu verwendende Signale mit der gleichen Frequenz wie die dritte Basisstation BS3 in der dritten Funkzelle FZ3. Aus diesem Grund empfängt die erste Mobilstation MS1 unter Verwendung der ersten Information I1 Signale aus der sechsten Funkzelle FZ6, obwohl in der ersten Information I1 die entsprechende Frequenz eigentlich deshalb angegeben war, damit die erste Mobilstation MS1 Signale aus dritten Funkzelle FZ3 und somit von der dritten Basisstation BS3 empfängt. Da in dem ersten Messreport MR1 aber weder Messergebnisse von der zweiten Funkzelle FZ2 noch von der dritten Funkzelle FZ3 noch von der vierten Funkzelle FZ4 noch von der fünften Funkzelle FZ5 enthalten sind, kann netzseitig davon ausgegangen werden, dass sich die erste Mobilstation MS1 in einer Verkehrsinsel der ersten Funkzelle FZ1 befindet und daher andere Nachbarfunkzellen hat als eine sich im regulären Bereich der ersten Funkzelle FZ1 befindende Mobilstation. Daher wird in Kasten 304 die zweite Information I2 der als zweite weitere Funkzellen F2 die sechste, siebte und achte Funkzelle FZ6, FZ7, FZ8 entnehmbar sind, an die erste Mobilstation MS1 gesendet. Gleichzeitig wird eine Nachricht INFO an das Managementsystem O&M gesendet, wie dies bereits zuvor anhand von Figur 2 für Kasten 204 beschrieben wurde.

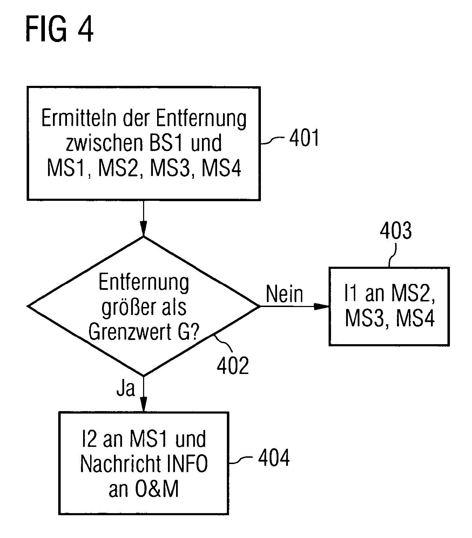

Figur 4 zeigt schematisch ein drittes Ablaufdiagramm zur Entscheidung, ob an eine Mobilstation die erste Information I1 oder die zweite Information 12 gesendet werden muss. Das dritte Ablaufdiagramm kann durchgeführt werden, bevor eine der Mobilstationen gemäß Figur 1 die erste Information I1 empfangen hat, beziehungsweise bevor netzseitig ein Messreport der Mobilstationen vorliegt.

In Kasten 401 ermittelt die erste Basisstation BS1 anhand eines jeweiligen Maßes der Entfernung jeweils einen Wert der Entfernung zu der ersten, zweiten, dritten und vierten Mobilstation MS1, MS2, MS3, MS4. Ein jeweiliges Maß für die Entfernung hat die erste Basisstation BS1 beispielsweise unabhängig von Messreporten über zu den Mobilstationen bestehende Verbindungen erhalten. Beispielsweise haben die Mobilstationen der ersten Basisstation BS1 jeweils ihre, beispielsweise mittels eines jeweiligen GPS-Empfängers ermittelte, Position übermittelt. In Kasten 402 wird ebenso wie in Kasten 203 aus Figur 2 überprüft, ob der jeweilige Wert der Entfernung der Mobilstationen größer ist als der Grenzwert G. Ist dies nicht der Fall, wird an die entsprechende Mobilstation die erste Information I1 gesendet. Dies ist gemäß Figur 1 für die zweite, dritte und vierte Mobilstation MS2, MS3, MS4 der Fall. Ist der Wert der Entfernung größer als der Grenzwert G, dies ist gemäß Figur 1 für die erste Mobilstation MS1 der Fall, wird in Kasten 404 - wie bereits zu Kasten 202 gemäß Figur 2 beschrieben - die zweite Information I2 an die erste Mobilstation MS1 gesendet. Weiterhin wird in Kasten 404 die Nachricht INFO an das Managementsystem O&M geschickt.

## Patentansprüche

1. Verfahren zum Betrieb eines Funkkommunikationssystems, bei dem
in wenigstens einer ersten Funkzelle (FZ1) eine erste Information (I1) an Teilnehmerstationen (MS1, MS2, MS3, MS4) gesendet wird, der entnehmbar ist, von welchen ersten weiteren Funkzellen (F1) die Teilnehmerstationen (MS1, MS2, MS3, MS4) jeweils Signale zum Erstellen von Messreporten (MR1, MR2, MR3, MR4) empfangen sollen,
**dadurch gekennzeichnet,**
**dass** in der ersten Funkzelle (FZ1) alternativ oder zusätzlich zu der ersten Information (I1) eine zweite Information (I2) an eine Teilnehmerstation (MS1) gesendet wird, der entnehmbar ist, von welchen zweiten weiteren Funkzellen (F2) die Teilnehmerstation (MS1) Signale zum Erstellen entsprechender Messreporte empfangen soll, wobei sich die ersten und zweiten weiteren Funkzellen (F1, F2) um wenigstens eine Funkzelle unterscheiden.

2. Verfahren nach Anspruch 1,
**dadurch gekennzeichnet,**
**dass** das Senden der zweiten Information (I2) in Abhängigkeit von wenigstens einem Maß der Entfernung zwischen der Teilnehmerstation (MS1) und einer die erste Funkzelle (FZ1) aufspannenden ersten Funkstation (BS1) erfolgt.

3. Verfahren nach Anspruch 2,
**dadurch gekennzeichnet,**
**dass** die zweite Information (I2) an die Teilnehmerstation (MS1) gesendet wird, falls die Entfernung zwischen der Teilnehmerstation (MS1) und der ersten Funkstation (BS1) einen Grenzwert (G) überschreitet.

4. Verfahren nach Anspruch 2 oder 3,
**dadurch gekennzeichnet ,**
**dass** Messergebnisse eines Signale der ersten weiteren Funkzellen (F1) betreffenden ersten Messreports (MR1) der Teilnehmerstation (MS1) als Maß der Entfernung zwischen der Teilnehmerstation (MS1) und der ersten Funkstation (BS1) verwendet werden.

5. Verfahren nach Anspruch 4,
**dadurch gekennzeichnet,**
**dass** die zweite Information (I2) an die Teilnehmerstation (MS1) gesendet wird, falls der erste Messreport (MR1) keine Messergebnisse oder ausschließlich Messergebnisse für Signale aus der ersten Funkzelle (FZ1) enthält.

6. Verfahren nach Anspruch 4 oder 5,
**dadurch gekennzeichnet ,**
**dass** die zweite Information (I2) an die Teilnehmerstation (MS1) gesendet wird, falls der erste Messreport (MR1) Messergebnisse für wenigstens eine Funkzelle (FZ6) enthält, die gemäß einer Netzplanung des Funkkommunikationssystems keine Nachbarfunkzelle der ersten Funkzelle (FZ1) ist.

7. Verfahren nach einem der vorstehenden Ansprüche,
**dadurch gekennzeichnet,**
**dass** die der zweiten Information (I2) entnehmbaren zweiten weiteren Funkzellen (F2) für die erste Funkzelle (FZ1) fest vorgegeben sind oder anhand von in der ersten Funkzelle (FZ1) empfangenen Messreporten dynamisch festgelegt werden.

8. Verfahren nach einem der vorstehenden Ansprüche,
**dadurch gekennzeichnet,**
**dass** das Senden der zweiten Information (I2) an die Teilnehmerstation (MS1) und/oder die der zweiten Information (I2) entnehmbaren zweiten weiteren Funkzellen (F2)
und/oder wenigstens ein, Signale der zweiten weiteren Funkzellen (F2) betreffender Messreport zusammen mit einer Kennung der ersten Funkzelle (FZ1) einem Managementsystem (O&M) des Funkkommunikationssystems mitgeteilt werden.

9. Funkstation (BS1)
mit Mitteln (SE) zum Senden einer ersten Information (I1) in wenigstens einer ersten Funkzelle (FZ1) an Teilnehmerstationen (MS1, MS2, MS3, MS4), wobei der ersten Information (I1) entnehmbar ist, von welchen ersten weiteren Funkzellen (F1) die Teilnehmerstationen (MS1, MS2, MS3, MS4) jeweils Signale zum Erstellen von Messreporten (MR1, MR2, MR3, MR4) empfangen sollen,
**gekennzeichnet,**
**durch** Mittel (SE) zum Senden einer zweiten Information (I2) in der ersten Funkzelle (FZ1) an eine Teilnehmerstation (MS1) alternativ oder zusätzlich zu der ersten Information (I1), wobei der zweiten Information (I2) entnehmbar ist, von welchen zweiten weiteren Funkzellen (F2) die Teilnehmerstation (MS1) Signale zum Erstellen entsprechender Messreporte empfangen soll, und wobei sich die ersten und zweiten weiteren Funkzellen (F1, F2) um wenigstens eine Funkzelle unterscheiden.

10. Funkkommunikationssystem mit einer Funkstation (BS1)
mit Mitteln (SE) zum Senden einer ersten Information (I1) in wenigstens einer ersten Funkzelle (FZ1) an Teilnehmerstationen (MS1, MS2, MS3, MS4), wobei der ersten Information (I1) entnehmbar ist, von welchen ersten weiteren Funkzellen (F1) die Teilnehmerstationen (MS1, MS2, MS3, MS4) jeweils Signale zum Erstellen von Messreporten (MR1, MR2, MR3, MR4) empfangen sollen,
**gekennzeichnet,**
**durch** Mittel (SE) zum Senden einer zweiten Information (I2) in der ersten Funkzelle (FZ1) an eine Teilnehmerstation (MS1) alternativ oder zusätzlich zu der ersten Information (I1), wobei der zweiten Information (I2) entnehmbar ist, von welchen zweiten weiteren Funkzellen (F2) die Teilnehmerstation (MS1) Signale zum Erstellen entsprechender Messreporte empfangen soll, und wobei sich die ersten und zweiten weiteren Funkzellen (F1, F2) um wenigstens eine Funkzelle unterscheiden.
